(19) Europäisches Patentamt

European Patent Office

Office européen des brevets

(11) **EP 1 116 094 B1**

(12) **EUROPÄISCHE PATENTSCHRIFT**

(45) Veröffentlichungstag und Bekanntmachung des Hinweises auf die Patenterteilung:
**07.08.2002 Patentblatt 2002/32**

(51) Int Cl.⁷: **G06F 3/06**, G06F 12/02, G06F 11/32

(21) Anmeldenummer: **99953669.1**

(22) Anmeldetag: **01.09.1999**

(86) Internationale Anmeldenummer:
**PCT/DE99/02756**

(87) Internationale Veröffentlichungsnummer:
**WO 00/13077 (09.03.2000 Gazette 2000/10)**

(54) **VERFAHREN ZUM SPEICHERN VON DATEN AUF EINEM SPEICHERMEDIUM MIT BEGRENZTER SPEICHERKAPAZITAET**

METHOD FOR STORING DATA ON A LIMITED-CAPACITY STORAGE MEDIUM

PROCEDE DE MISE EN MEMOIRE DE DONNEES SUR UN SUPPORT MEMOIRE A CAPACITE LIMITEE

(84) Benannte Vertragsstaaten:
**BE DE ES FR GB NL**

(30) Priorität: **01.09.1998 DE 19839809**

(43) Veröffentlichungstag der Anmeldung:
**18.07.2001 Patentblatt 2001/29**

(73) Patentinhaber: **SIEMENS AKTIENGESELLSCHAFT**
**80333 München (DE)**

(72) Erfinder:
• **ENDRES, Ruediger**
**D-81379 München (DE)**
• **LANGE, Alfred**
**D-80993 München (DE)**
• **NIESSNER, Egon**
**D-86415 Mering (DE)**

(56) Entgegenhaltungen:
**EP-A- 0 720 085        EP-A- 0 788 053**
**WO-A-97/35409**

• **"Anticipation of Data Set Expansion" IBM TECHNICAL DISCLOSURE BULLETIN., Bd. 25, Nr. 7A, Dezember 1982 (1982-12), Seiten 3280-3281, XP002130652 IBM CORP. NEW YORK., US ISSN: 0018-8689**
• **PATENT ABSTRACTS OF JAPAN vol. 015, no. 122 (P-1184), 26. März 1991 (1991-03-26) & JP 03 010341 A (NEC CORP), 17. Januar 1991 (1991-01-17)**

**Beschreibung**

Die vorliegende Erfindung betrifft ein Verfahren zum Speichern von Daten auf einem Speichermedium mit begrenzter Speicherkapazität eines Computersystems.

Herkömmlicherweise weist jedes Computersystem ein Speichermedium auf, das einerseits dazu dient Programme zu speichern und andererseits dazu dient, Daten zu speichern, die beispielsweise beim Ausführen eines Anwendungsprogramms anfallen. Jedes Speichermedium, wie z. B. Magnetbänder, Magnetplatten oder Magnetooptik-Platten, kann nur eine begrenzte Anzahl an Daten speichern. Die Speicherkapazität jedes Speichermediums ist demnach begrenzt.

Dadurch tritt das Problem auf, daß keine Daten mehr auf dem Speichermedium gespeichert werden können, wenn der freie Speicherplatz des Speichermediums erschöpft ist.

Aus diesem Grund wurde bisher die Speicherplatzbelegung eines Computersystems, wie beispielsweise von Vermittlungsrechnern von Telekommunikationssystemen, die auch als Steuerrechner eingesetzt werden können, überwacht. Beispielsweise wurden in regelmäßigen Abständen sogenannte temporäre Dateien, d. h. Dateien für die bei der Speicherung bestimmt wurde, daß sie nur vorübergehend gespeichert werden sollen, gelöscht. Des weiteren führen bei Vermittlungsrechnern von Telekommunikationssystemen sogenannte Protokolldateien zu einer erheblichen Speicherplatzbelegung. Die Protokolldateien umfassen Daten, die beispielsweise während eines Testbetriebs des Vermittlungssystems oder anderen Anwendungen protokolliert werden und auf die zum Zweck einer späteren Auswertung zurückgegriffen werden soll. Derartige Protokolldateien können mit der Zeit zu einer vollständigen Speicherplatzbelegung des Speichermediums des Computersystems führen. Ferner kann es bei Dauertests in der Nacht oder bei sogenannten Burst-Situationen zu einem schnellen Anwachsen der gespeicherten Daten kommen. Unter Burst-Situationen versteht man beispielsweise Situationen, bei denen durch einen Fehler im System, wie beispielsweise das Fehlen von ausreichendem Speicherplatz, weitere Folgefehler entstehen, die wiederum gespeichert werden. Somit verbrauchen in solchen Situationen die Folgefehler den verbleibenden Speicherplatz und überdecken die eigentliche Ursache für diese Folgefehler.

Um das vollständige Aufbrauchen des Speicherplatzes zu verhindern, wurde eine Gliederung des Speicherplatzes in Filesysteme vorgeschlagen. Dabei wurden temporäre Dateien und einige Protokolldateien in bestimmten Files gespeichert und nach regelmäßigen Zeitintervallen gelöscht. Es wurden dabei jedoch nicht alle Protokolldateien erfaßt. Des weiteren konnten die durch die Anwendung eines Vermittlungsrechners als Steuerrechner zusätzlich erzeugten Protokolldateien nicht erfaßt werden. Demnach fand bisher keine echte Speicherplatzüberwachung statt.

Damit traten bei dem bisherigen Verfahren zum Speichern von Daten die folgenden Probleme auf: falls der frei Speicherplatz erschöpft war, gingen die Daten, die gespeichert werden sollten, verloren. Ferner traten regelmäßig Störungen bei Vermittlungscomputersystemen aufgrund des knapper werdenden freien Speicherplatzes auf. In Extremfällen traten sogar Störungen des Gesamtcomputernetzwerkes auf, wie z. B. der Ausfall der Kommunikation zwischen dem Vermittlungssteuerrechner und der Vermittlungsanlage. Dies führte zu einem Ausfall der gesamten Telekommunikationsanlage. In einem solchen Fall konnte das Computersystem nur noch über Notfalldisketten mit dem damit verbundenen Risiko hochgefahren werden. Des weiteren trat bei knapp werdendem Speicherplatz ein Umschalten des Computersystems auf eine Stand-by-Betriebsart auf. Auch mit diesem Umschalten waren Störungen des Computersystems verbunden.

EP-A-0 788 053 offenbart ein Verfahren zum Speichern von Daten auf einem Speichermedium, mit periodischem Überwachen des freien Speicherplatzes und Löschen von Dateien falls die Größe des freien Speicherplatzes einen ersten Wert unterschreitet.

Es ist deshalb die Aufgabe der vorliegenden Erfindung ein verbessertes Verfahren zum Speichern von Daten auf einem Speichermedium mit begrenzter Speicherkapazität eines Computersystems anzugeben, bei dem Störungen des Computersystems und ein Datenverlust bei Anwendungen vermieden werden, die die Speicherkapazität des Speichermediums des Computersystems ganz oder nahezu erschöpfen.

Diese Aufgabe wird durch ein Verfahren mit den Merkmalen des Anspruchs 1 gelöst, wobei sich vorteilhafte Ausgestaltungen aus den Unteransprüchen ergeben. Im einzelnen wird bei dem erfindungsgemäßen Verfahren zumindest eine Pufferdatei auf dem Speichermedium gespeichert, der frei Speicherplatz des Speichermediums periodisch überwacht und, falls die Größe des freien Speicherplatzes einen ersten Wert unterschreitet, die Pufferdatei gelöscht und eine Warnung an den/die Nutzer des Computersystems abgegeben.

Vorteilhaft an diesem Verfahren ist, daß durch das Löschen der Pufferdatei und das Abgeben einer Warnung an den oder die Nutzer des Computersystems diese Zeit gewinnen, um ihre Anwendungsprogramme definiert herunterzufahren und gegebenenfalls ein definiertes Umschalten auf eine Stand-by-Betriebsart ausgelöst wird. Durch das Herunterfahren der Anwendungsprogramme bei noch ausreichendem Speicherplatz wird einerseits der Speicherplatzbedarf verringert und andererseits ein sicheres Abspeichern von Daten bei noch ausreichendem Speicherplatz ermöglicht.

In einer vorteilhaften Ausgestaltung des erfindungsgemäßen Verfahrens wird, falls die Größe des freien Speicherplatzes nach einem Unterschreiten eines ersten Wertes einen zweiten Wert, der größer als der erste Wert ist, wieder überschreitet, die Pufferdatei wieder gespeichert. Hierdurch wird sichergestellt, daß, falls ausreichend Speicherplatz vorhanden ist, immer eine Pufferdatei gespeichert ist.

Des weiteren kann zusätzlich zu der Warnung, die dem Nutzer beim Löschen der Pufferdatei gegeben wird, ihm eine Warnung gegeben werden, falls die Größe des freien Speicherplatzes einen dritten Wert unterschreitet, der größer als der erste Wert und kleiner als der zweite Wert ist. Hierdurch kann schon vor dem Löschen der Pufferdatei der Nutzer Maßnahmen ergreifen, um freien Speicherplatz zu schaffen.

Des weiteren können zum Verhindern des vollständigen Speicherplatzaufbrauchs, falls die Größe des freien Speicherplatzes einen vierten Wert unterschreitet, der kleiner als der erste Wert ist, Protokolldateien gelöscht werden. Hierdurch kann vorteilhafterweise auf Kosten des Löschens von Protokolldateien ein Systemabsturz verhindert werden.

Ferner kann nach dem Löschen der Pufferdatei oder nach dem Löschen der Protokolldateien das Computersystem auf eine Stand-by-Betriebsart umgeschaltet werden, wodurch ein vollständiges Aufbrauchen des verbleibenden Speicherplatzes und die damit verbundenen Störungen verhindert werden.

In einer weiteren vorteilhaften Ausbildung des erfindungsgemäßen Verfahrens wird auch die Größe der Protokolldateien periodisch überwacht, ein Back-up der Protokolldateien auf einem separaten Speichermedium durchgeführt, falls die Protokolldateien eine bestimmte Dateigröße überschritten haben, und daraufhin werden die Protokolldateien gelöscht. Hierdurch wird gewährleistet, daß selbst wenn Protokolldateien gelöscht werden, auf ein Back-up einer früheren Version der Protokolldateien zurückgegriffen werden kann.

Ferner wird das Überwachen des freien Speicherplatzes des Speichermediums und/oder das Überwachen der Größe der Protokolldateien als Hintergrundprozedur auf dem Computersystem ausgeführt.

Die vorliegende Erfindung wird nun anhand von Ausführungsbeispiel mit Bezug zu den Zeichnungen erläutert.

Fig. 1 zeigt die Verfahrensschritte, die bei einer bestimmten Speicherplatzbelegung ausgeführt werden, und

Fig. 2 zeigt die Back-up-Prozedur für die Protokolldateien.

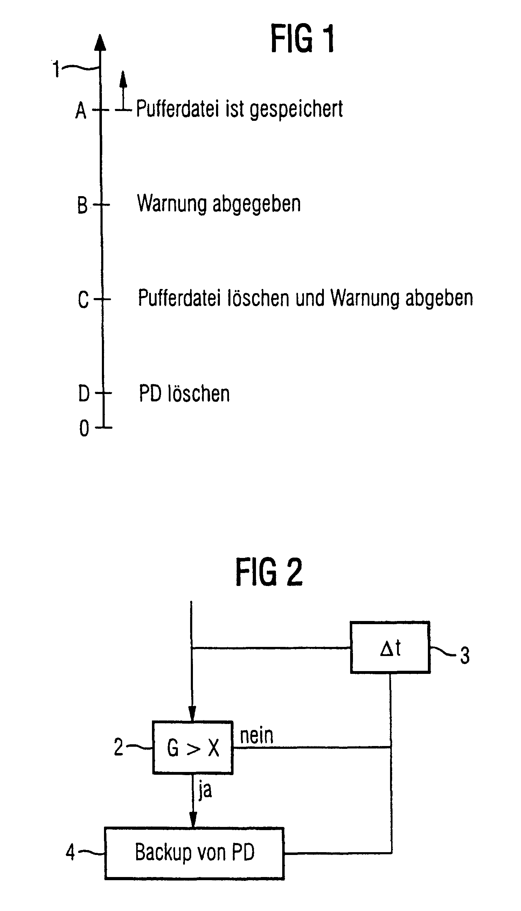

Anhand von Fig. 1 wird ein Ausführungsbeispiel des erfindungsgemäßen Verfahrens zum Speichern von Daten erläutert. Der Strahl 1 stellt den freien Speicherplatz eines Speichermediums eines Computersystems dar. Der mit "0" bezeichnete Beginn des Strahls 1 kennzeichnet einen Zustand, bei dem kein freier Speicherplatz auf dem Speichermedium verfügbar ist. Mit den Buchstaben A bis D sind Werte auf dem Strahl gekennzeichnet, die jeweils eine Größe des verbleibenden freien Speicherplatzes des Speichermediums darstellen. Dabei ist bei A noch ausreichend Speicherplatz vorhanden, bei B weniger freier Speicherplatz als bei A vorhanden, bei C ist noch weniger freier Speicherplatz vorhanden und bei D ist der freie Speicherplatz weitgehend aufgebraucht, so daß der Zustand des Computersystems kritisch ist. D. h. das Computersystem ist bei einer Größe des freien Speicherplatzes, die durch D gekennzeichnet ist, sehr anfällig für Störungen oder einen Systemausfall.

Die Werte, die durch die Buchstaben A bis D gekennzeichnet sind, entsprechend damit jeweils Größen des freien Speicherplatzes, die der folgenden Beziehung genügen:

$$A > B > C > D.$$

Falls die Größe des freien Speicherplatzes, die von dem Computersystem periodisch überwacht wird, größer als der Wert A ist, wird eine Pufferdatei in einen für Anwendungen weniger relevanten und auch nicht für schreibenden Datenzugriff vorgesehenen Speicherbereich geschrieben, falls dies nicht bereits geschehen ist.

Unterschreitet die Größe des freien Speicherplatzes den Wert B, wird allen Nutzern des Computersystems eine Warnung gegeben, daß der verbleibende freie Speicherplatz den Wert B unterschritten hat. In diesem Fall können die Nutzer geeignete Maßnahmen ergreifen, um die Größe des freien Speicherplatzes zu erhöhen. Beispielsweise können sie unnötig gespeicherte Dateien löschen. Des weiteren können sie Anwendungen ohne Störungen herunterfahren oder abbrechen, die bei einer weiteren Ausführung sehr viel Speicherplatz benötigen würden. Ferner können es die Nutzer in diesem Fall unterlassen weitere Anwendungen zu starten, die noch mehr Speicherplatz benötigen.

Falls die Maßnahmen der Nutzer nicht zu einem Anwachsen des freien Speicherplatzes führen, sondern sich im Gegenteil die Größe des freien Speicherplatzes weiter verringert, wird bei Unterschreiten des Wertes C die Pufferdatei gelöscht. Zusätzlich wird den Benutzern eine weitere von der Warnung bei B vorteilhafterweise verschiedene Warnung gegeben, daß der verfügbare freie Speicherplatz noch geringer ist und die Pufferdatei gelöscht wurde. Durch diese weitere Warnung werden die Nutzer einerseits alarmiert speicherplatzverbrauchende Anwendungen sofort herunterzufahren oder definiert abzubrechen, um Störungen des Computersystems zu verhindern und um die Daten ihrer Anwendungen noch sichern zu können. Andererseits wird durch das Löschen der Pufferdatei auf besonders einfache Weise den Nutzern Zeit gegeben Anwendungsprogramme definiert herunterzufahren und gegebenenfalls ein definiertes Umschalten auf die Stand-by-Betriebsart auszulösen. Durch diese Maßnahmen und durch das Löschen der Pufferdatei sollte die Größe des freien Speicherplatzes so weit anwachsen, daß sie den Wert A weit überschreitet. Beim Überschreiten des Wertes A wird die Pufferdatei erneut auf dem Speichermedium gespeichert, so daß sie bei einem erneuten Abfall der Größe des freien Speicherplatzes zur Verfügung steht.

Sollten allerdings die Maßnahmen der Nutzer und das Löschen der Pufferdatei nicht ausreichen, die Größe des freien Speicherplatzes zu erhöhen und fällt die Größe des freien Speicherplatzes im Gegenteil weiter unter den Wert D ab, werden Protokolldateien PD gelöscht. Durch das Löschen der Protokolldateien PD in der Ausnahmesituation, daß der freie Speicherplatz fast vollständig aufgebraucht ist, wird auf Kosten des Verlustes der Protokolldateien PD ein größerer Schaden, wie z. B. Störungen des gesamten Computersystems oder der Verlust von wichtigeren Daten als die, die in den Protokolldateien enthalten sind, verhindert.

In einem weiteren Ausführungsbeispiel der vorliegenden Erfindung, können ferner anstatt dem Abgeben von nur einer Warnung bei dem Wert B der Größe des freien Speicherplatzes aufeinanderfolgend mehrere sich unterscheidende Warnungen mit geringer werdendem Speicherplatz gegeben werden. Des weiteren können anstatt von nur einer Pufferdatei mehrere Pufferdateien in einem für die Anwendung weniger relevanten Speicherbereich gespeichert werden. Diese können dann in Verbindung mit der Abgabe von aufeinanderfolgenden Warnungen nacheinander gelöscht werden.

Des weiteren kann in einer weiteren vorteilhaften Ausbildung der Erfindung eine Back-up-Prozedur für die Protokolldateien durchgeführt werden, d. h. die Protokolldateien werden zyklisch gemacht. Diese Prozedur wird anhand von Fig. 2 erläutert. Protokolldateien werden in Verbindung mit verschiedenen Anwendungen auf dem Computersystem auf dem Speichermedium gespeichert. Die Protokolldateien dienen der späteren Auswertung der Ergebnisse der Anwendungen. Dabei ist es nicht erforderlich, daß die Protokolldateien beliebig lange gespeichert werden, und es ist auch nicht erforderlich, daß die Protokolldateien mehr als eine einmal festgelegte Größe des Speicherplatzes einnehmen. Gemäß dem in Fig. 2 dargestellten Verfahren wird die Größe der Protokolldateien periodisch überwacht. Beispielsweise wird die Größe der Protokolldateien alle fünf Minuten erfaßt. Falls die erfaßte Größe G der Protokolldateien PD kleiner oder gleich einem im Voraus festgelegten Wert X ist, der beispielsweise 10 Megabyte sein kann, fährt die Back-up-Prozedur, wie es durch ein "nein" in Fig. 2 gekennzeichnet ist, mit Schritt 3 fort. In Schritt 3 wird eine Warteschleife ausgeführt und danach der Entscheidungsschritt 2 erneut durchgeführt.

Falls die Größe G der Protokolldateien PD irgendwann den Wert X überschreitet, wie es durch ein "ja" in Fig. 2 gekennzeichnet ist, fährt das Verfahren mit Schritt 4 fort. In Schritt 4 wird ein Back-up von den Protokolldateien PD auf einem separaten Speichermedium durchgeführt. Danach kehrt die Prozedur mit der Warteschleife 3 fort und es können wieder neue Protokolldateien gespeichert werden.

Durch diese Back-up-Prozedur wird der von den Protokolldateien benötigte Speicherplatz auf eine Größe X begrenzt. Andererseits kann, falls die Größe des freien Speicherplatzes den Wert D unterschreitet und daraufhin die Protokolldateien PD gelöscht werden (siehe Fig. 1), auf das Back-up der Protokolldateien zurückgegriffen werden, so daß der Schaden, der durch das Löschen der Protokolldateien entsteht, minimiert werden kann.

Das periodische Überwachen des freien Speicherplatzes des Speichermediums und das Überwachen der Größe der Protokolldateien PD sowie die Back-up-Prozedur der Protokolldateien PD werden als Hintergrundprozedur auf dem Computersystem ausgeführt, um eine anwendersystem-bedingte Datenlast auf das Computersystem auf dessen geringfügige Kosten und zugunsten der Datensicherheit und der Stabilität des Anwendersystems zu schützen.

## Patentansprüche

1. Verfahren zum Speichern von Daten auf einem Speichermedium mit begrenzter Speicherkapazität eines Computersystems, umfassend die folgenden Schritte:

   - Speichern zumindest einer Pufferdatei auf dem Speichermedium,
   - periodisches Überwachen des freien Speicherplatzes des Speichermediums,
   - Löschen der Pufferdatei und Abgeben einer Warnung an den/die Nutzer des Computersystems, falls die Größe des freien Speicherplatzes einen ersten Wert (C) unterschreitet.

2. Verfahren gemäß Anspruch 1 wobei, falls die Größe des freien Speicherplatzes nach dem Unterschreiten des ersten Wertes (C) einen zweiten Wert (A), der größer als der erste Wert (C) ist, wieder überschreitet, die Pufferdatei wieder gespeichert wird.

3. Verfahren gemäß Anspruch 1 oder 2, wobei vor dem Löschen der Pufferdatei, falls die Größe des freien Speicherplatzes einen dritten Wert (B), der größer als der erste Wert (C) ist und kleiner als der zweite Wert (A) ist, unterschreitet, zumindest eine Warnung an den/die Nutzer abgegeben wird.

4. Verfahren gemäß einem der vorstehenden Ansprüche, wobei, falls die Größe des freien Speicherplatzes einen vierten Wert (D), der kleiner als der erste Wert (C) ist, unterschreitet, Protokolldateien (PD) gelöscht werden.

5. Verfahren gemäß einem der vorstehenden Ansprüche, wobei nach dem Löschen der Pufferdatei oder nach dem Löschen der Protokolldateien (PD) das Computersystem auf eine Stand-by-Betriebsart umgeschaltet wird.

6. Verfahren gemäß einem der vorstehenden Ansprüche, umfassend die folgenden weiteren Schritte:

   - periodisches Überwachen der Größe der Protokolldateien (PD),
   - Durchführen eines Back-up der Protokolldatei auf ein separates Speichermedium, falls diese eine bestimmte Protokolldateigröße (G) überschreitet, und
   - Löschen der Protokolldatei nach dem Durchführen des Backups.

7. Verfahren gemäß einem der vorstehenden Ansprüche, wobei das Überwachen des freien Speicherplatzes, des Speichermediums und/oder das Überwachen der Größe der Protokolldateien (PD) als Hintergrundprozedur auf dem Computersystem ausgeführt wird.


## Claims

1. Method for storing data on a storage medium having limited storage capacity of a computer system, comprising the following steps:

   - storing at least one buffer file on the storage medium,
   - periodically monitoring the free storage space of the storage medium,
   - erasing the buffer file and issuing a warning to the user/users of the computer system if the size of the free storage space falls below a first value (C).

2. Method according to Claim 1, wherein, if the size of the free storage space, after falling below the first value (C), again exceeds a second value (A), which is greater than the first value (C), the buffer file is stored again.

3. Method according to Claim 1 or 2, wherein, prior to erasing the buffer file, if the size of the free storage space falls below a third value (B), which is greater than the first value (C) and less than the second value (A), at least one warning is issued to the user or the users.

4. Method according to one of the preceding claims, wherein, if the size of the free storage space falls below a fourth value (D), which is less than the first value (C), protocol files (PD) are erased.

5. Method according to one of the preceding claims, wherein, after the buffer file has been erased or after the protocol files (PD) have been erased, the computer system is switched to a standby operating mode.

6. Method according to one of the preceding claims, comprising the following further steps:

   - periodically monitoring the size of the protocol files (PD),
   - carrying out a backup of the protocol file onto a separate storage medium if it exceeds a specific protocol file size (G), and
   - erasing the protocol file after carrying out the backup.

7. Method according to one of the preceding claims, wherein the monitoring of the free storage space, of the storage medium and/or the monitoring of the size of the protocol files (PD) is executed as a background procedure on the computer system.


## Revendications

1. Procédé destiné à mémoriser des données sur un support mémoire de capacité limitée d'un système d'ordinateurs et comportant les étapes suivantes:

   - mémorisation d'au moins un fichier tampon sur le support mémoire,
   - surveillance périodique de l'emplacement de mémoire disponible sur le support mémoire,
   - effacement du fichier tampon et envoi d'une alarme au/aux utilisateur(s) du système d'ordinateurs, si le volume de l'emplacement de mémoire disponible dépasse vers le bas une première valeur (C).

2. Procédé selon la revendication 1, le fichier tampon étant de nouveau mémorisé si le volume de l'emplacement de mémoire disponible, après le dépassement vers le bas de la première valeur (C), dépasse de nouveau vers le haut une deuxième valeur (A) qui est supérieure à la première valeur (C).

3. Procédé selon la revendication 1 ou 2, au moins une alarme étant, avant l'effacement du fichier tampon, envoyée au/aux utilisateur(s) si le volume de l'emplacement de mémoire disponible dépasse vers le bas une troisième valeur (B), qui est supérieure à la première valeur (C) et inférieure à la deuxième valeur (A).

4. Procédé selon l'une des revendications précédentes, des fichiers rapports (PD) étant effacés si le volume de l'emplacement de mémoire disponible dépasse vers le bas une quatrième valeur (D), qui est inférieure à la première valeur (C).

5.  Procédé selon l'une des revendications précédentes, le système d'ordinateurs étant basculé, après l'effacement du fichier tampon ou après l'effacement des fichiers rapports (PD), sur un mode d'exploitation d'attente.

6.  Procédé selon l'une des revendications précédentes comportant les autres étapes suivantes:

    -   surveillance périodique du volume des fichiers rapports (PD),
    -   exécution d'une sauvegarde (ou back-up), sur un support mémoire séparé, du fichier rapport si celui-ci dépasse un volume déterminé (G) et
    -   effacement du fichier rapport après l'exécution de la sauvegarde (ou back-up).

7.  Procédé selon l'une des revendications précédentes, la surveillance de l'emplacement de mémoire disponible, du support mémoire et/ou la surveillance du volume des fichiers rapports (PD) étant effectuées sur le système d'ordinateurs comme procédure de fond.

# FIG 1

1

A — Pufferdatei ist gespeichert

B — Warnung abgegeben

C — Pufferdatei löschen und Warnung abgeben

D — PD löschen

0

# FIG 2

$\Delta t$ —3

2— $G > X$   nein

ja

4— Backup von PD